**Europäisches Patentamt**

**European Patent Office**

**Office européen des brevets**

(19)

(11) Numéro de publication: **0 060 763**
**B2**

(12) **NOUVEAU FASCICULE DE BREVET EUROPÉEN**

(45) Date de publication du nouveau fascicule du brevet:
**04.01.89**

(21) Numéro de dépôt: **82400393.3**

(22) Date de dépôt: **08.03.82**

(51) Int. Cl.⁴: **F 02 K 1/80**, F 02 K 1/00

(54) **Dispositif de roulement et de guidage d'une tuyère orientable de propulseur à réaction.**

(30) Priorité: **13.03.81 FR 8105460**

(43) Date de publication de la demande:
**22.09.82 Bulletin 82/38**

(45) Mention de la délivrance du brevet:
**05.06.85 Bulletin 85/23**

(45) Mention de la decision concernant l'opposition:
**04.01.89 Bulletin 89/1**

(84) Etats contractants désignés:
**DE FR GB**

(56) Documents cité:
**DE-A-2 334 295**
**DE-A-2 719 439**
**FR-A-1 025 827**
**FR-A-2 470 253**
**FR-E-76 840**
**US-A-3 016 697**
**US-A-3 147 591**

**NAVY TECHNICAL DISCLOSURE BULLETIN, vol. 1,
no. 7, novembre 1976, Office of Naval Research,
ARLINGTON, F.B. BUCHE: "Low torque and low
cost movable nozzle-Rollvec bearing and seal",
pages 39-42**

(73) Titulaire: **SOCIETE NATIONALE D'ETUDE ET DE
CONSTRUCTION DE MOTEURS D'AVIATION,
"S.N.E.C.M.A.", 2 Boulevard Victor, F-75015 Paris
(FR)**

(72) Inventeur: **Joubert, Raymond Jean Maurice, 1,
allée Gustave Courbet Domaine de Grand Vaux,
F-91600 Savigny sur Orge (FR)**

(74) Mandataire: **Moinat, François, S.N.E.C.M.A.
Service des Brevets Boîte Postale 81, F-91003
Evry Cédex (FR)**

EP 0 060 763 B2

LIBER, STOCKHOLM 1989

## Description

L'invention concerne une tuyère orientable de propulseur à réaction du genre dans lequel une partie fixe de la tuyère présente à son extrémité arrière une portée sphérique contre laquelle est susceptible de se déplacer une portée sphérique d'une virole constituant la partie mobile de la tuyère, des moyens d'étanchéité étant prévus entre les parties fixes et mobiles.

Les avions d'armes modernes imposent pour leurs changements d'assiette des moyens d'action qui, contrairement aux gouvernes aérodynamiques, n'entraînent pas une augmentation concomitante de la traînée. Ces exigences ont conduit à l'utilisation de réacteurs à tuyère orientable qui permettent d'obtenir selon la composante de déviation choisie une modification rapide de l'assiette. Parmi les différents types de tuyères orientables, celles à articulation sphérique permettant une orientation dans tous les sens, sont peu encombrantes et d'une réalisation simple. Le document EP-A-0 029 773 ayant une priorité du 23 novembre 1979 au nom de la Demanderesse et publié le 3 juin 1981, décrit une tuyère orientable à articulation sphérique constituée d'une partie mobile comportant une virole cylindrique de déviation du jet prolongée en amont par deux portées sphériques intérieure et extérieure coaxiales et une partie fixe formée par l'extrémité du canal d'éjection prolongée en aval par une portée sphérique. La portée sphérique intérieure de la partie mobile coopère avec une portée sphérique maintenue à l'extrémité de la chemise de protection thermique et assure l'étanchéité du flux des gaz éjectés. Le portée sphérique extérieure de le partie mobile se déplace le long de la portée sphérique de la partie fixe en entraînent l'extrémité d'une membrane d'étanchéité dont l'autre extrémité est fixée à la portée sphérique fixe.

Par le DE-A-2 334 295 on connaît déjà une tuyère orientable pour un missile à réaction, mais dans de domaine, la partie sphérique mobile est de petit diamètre et peut être réalisée massivement, elle n'est pas déformable, ce qui résoud aisément les problèmes d'étanchéité et de guidage. Par contre, dans une tuyère de turboréacteur, les portées sphériques sont des pièces de chaudronnerie de faible épaisseur et dont les écarts dimensionnels dus aux tolérances de fabrication sont relativement importants. De plus, ces pièces de chaudronnerie sont soumises à des vibrations qui limitent leur durée de vie.

L'invention vise à la diminution, sinon à la suppression de ces vibrations et à une meilleure répartition des efforts dus à la pression dynamique du flux dévié par la partie mobile.

La tyuère orientable objet de l'invention, permet d'augmenter la rigidité des portées et de reprendre une partie des efforts supportés par la partie mobile, l'autre partie étant reprise par le système de vérins permettant l'orientation de la tuyère. A cet effet, la portée mobile coopère respectivement pour l'étanchéité avec une portée fixe interne et, pour la reprise des efforts mécaniques, avec une portée fixe externe.

Les explications et figures données ci-après à titre d'exemple permettront de comprendre comment l'invention peut être réalisée.

La figure 1 est une vue en coupe axiale d'une tuyère orientable comportant une première forme de réalisation du dispositif selon l'invention.

La figure 2 est une vue en coupe axiale d'une tuyère orientable selon une deuxième forme de réalisation.

La figure 3 est une vue en coupe axiale d'une troisième forme de réalisation.

La figure 4 est une vue selon IV - IV de la figure 3 montrant une forme de réalisation des moyens de guidage.

La figure 5 est une vue en coupe axiale d'une quatrième forme de réalisation.

La figure 6 est une vue en coupe transversale partielle d'une cinquième forme de réalisation.

La figure 7 est une vue selon VII de la figure 6.

Dans la description et les figures, les éléments semblables portent les mêmes références. Les figures représentent les tuyères dirigées vers le haut.

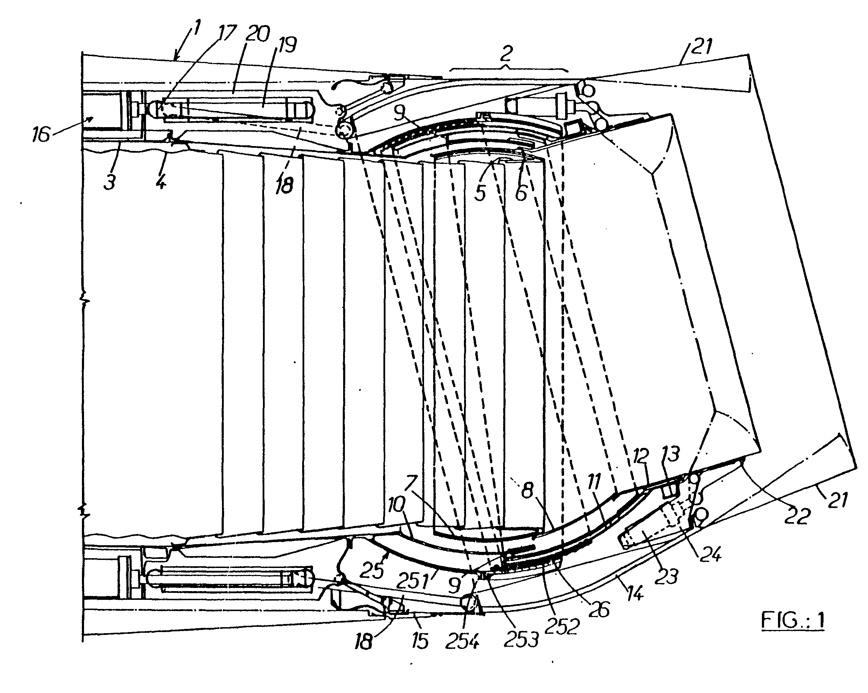

La figure 1 montre, vue en coupe axiale, une tuyère orientable 2 équipant l'extrémité d'un fuselage ou d'une nacelle 1 d'avion.

Le canal de post-combustion 3 ou d'éjection est doublé vers l'intérieur d'une chemise de protection thermique 4 qui se termine par une portée cylindrique 5. Sur la surrface interne dè celle-ci, vient coulisser, sous l'action de la pression des gaz de refroidissement circulant entre le canal 3 et la chemise 4, un élément cylindrique 6 solidaire intérieurement d'une virole sphérique 7 formant une bague sphérique creuse. La surface extérieure de la virole 7 coopère avec une portée sphérique 8 appartenant à la partie mobile de la tuyère. La bague sphérique creuse a pour fonction d'empêcher les gaz de refroidissement de s'échapper dans le flux des gaz d'éjection et de les amener entre la virole 7 et la membrane d'étanchéité 9 pour assurer le refroidissement de cette dernière.

L'extrémité aval du canal 3 est prolongée par une portée sphérique 10.

La partie mobile de la tuyère comprend une virole cylindrique 12 portant en amont la portée sphérique intérieure 8 et une portée spérique extérieure 11. La portée extérieure 11 recouvre coaxialement la portée intérieure 8 et au moins une partie de la virole cylindrique 12. La portée intérieure 8 glisse, comme précédemment signalé, contre la bague sphérique creuse 7 pour assurer l'étanchéité entre les gaz de refroidissement et le flux éjecté. La portée extérieure 11 porte la membrane d'étanchéité 9, qui est fixée par un de ses bords sur la partie de portée proche de la virole cylindrique 12 et par son autre bord au bord libre de la portée sphérique 10 de la partie fixe. Selon le mode de réalisation représenté, la virole sphérique extérieure 11 est portée par une virole 13 fixée à la virole cylindrique 12.

La partie mobile de la tuyère est maintenue par une structure sphérique extérieure 14 dont la rotation est commandée par un système de vérins. L'étanchéité entre la structure sphérique extérieure et le fuselage ou la nacelle est assurée par une couronne de volets élastiques 15 qui s'appuient contre la structure.

Les vérins 16 commandant la rotation de la tuyère ont leur corps logé d'une façon fixe entre le canal 3 et le fuselage ou nacelle 1. Les tiges de vérins viennent agir sur les patins 17 solidaires d'une des extrémités des biellettes 18 et qui coulissent dans les glissières 19 des ferrures 20. Les autres extrémités des biellettes 18 sont articulées à la structure 14. Les vérins 16 peuvent être de n'importe quel type: hydraulique, pneumatique, à vis, etc... et agir en traction ou en poussée.

La structure 14 porte à son extrémité aval les volets extérieurs 21 d'un dispositif de modification de la section terminale de l'arrière corps. Ces volets sont actionnés par l'intermédiaire d'une biellette (non représentée) articulée sur les volets intérieurs 22, eux-mêmes à section variable et régulée par les vérins 23 fixés entre la structure 14 et les volets 22. La liaison entre la partie mobile de la tuyère et la structure sphérique extérieure est obtenue au moins en partie par les supports 24 des vérins 23 qui sont solidaires de la virole 13 et de l'extrémité aval de la structure extérieure 14.

Les éléments ci-dessus décrits sont déjà connus de la demande de brevet précédemment citée. Le dispositif selon l'invention concerne entre autres des moyens de roulement coopérant avec les surfaces en regard de deux portées sphériques, l'une appartenant à la partie fixe et l'autre à la partie mobile de la tuyère orientable.

Selon les exemples de réalisation représentés figures 1, 2, 3, dans lesquels la virole cylindrique de l'extrémité aval du canal porte une bague sphérique creuse, il est prévu sur la partie fixe une deuxième portée sphérique extérieure 25.

Les moyens de roulement 26 sont alors placés entre la portée sphérique extérieure 11 de la partie mobile et la portée sphérique extérieure 25 de la partie fixe.

Dans l'exemple de la figure 1, les moyens de roulement 26 sont constitués de bles maintenues dans une cage formée de deux anneaux sphériques en clinquant d'acier inoxydable comportant des alvéoles disposés en quinconce dans lesquels sont logées les billes. Les anneaux sont réunis par des moyens de fixation connus tels que rivets, points de soudure, etc... Pour permettre la mise en place de l'anneau de billes 26, la portée sphérique extérieure 25 de la partie fixe est formée de deux parties 251 et 252, la partie 252, démontable, est fixée par sa bride 253 sur la bride 254 de la partie 251 par boulonnage.

Les moyens de roulement permettent la transmission des efforts subis par la portée extérieure 11 de la partie mobile à la partie fixe par l'intermédiaire de la portée 25 qui peut sans inconvénient être munie des renforts sur sa paroi extérieure.

Du fait de la grande souplesse de l'articulation due aux moyens de roulement, il est prévu des moyens de guidage, non représentés sur la figure 1, et qui seront ultérieurement décrits évitant toute rotation axiale de la partie mobile lors des changements de direction du jet.

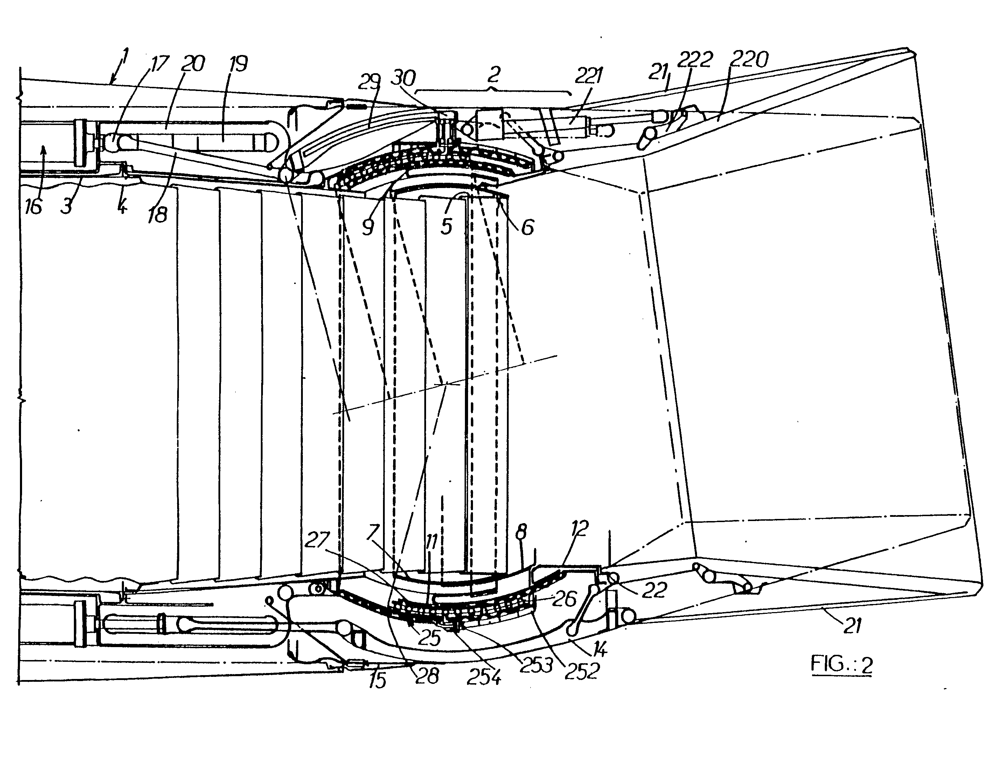

La figure 2 montre un deuxième exemple de réalisation de l'invention dans laquelle l'anneau de billes 26 est maintenu entre deux garnitures alvéolées 27, 28, souples, fixées sur les portées sphériques fixe 25 et mobile 11. Les alvéoles sont répartis en quinconce sur les faces interne et externe. Ces éléments souples sont destinés à amortir les vibrations et à absorber les écarts dimensionnels dus aux tolérances de fabrication des ensembles chaudronnés. Entre les faces en regard de ces garnitures souples est placé l'anneau de billes (26).

Les moyens de guidage de la partie mobile de la tuyère comportent une rampe 29 ménagée à l'intérieur de la structure sphérique extérieure 14 de la tuyère mobile et d'un galet 30 fixé par son axe sur la surface extérieure de la portée sphérique extérieure 25 de la partie fixe.

La tuyère orientable représentée sur la figure 2 est une tuyère convergente divergente.

La virole cylindrique 12 est prolongée en aval par un dispositif de modification 220 de la section de la tuyere d'éjection. Ce dispositif, solidaire de la structure extérieure mobile 14 en ce qui concerne le déplacement de son axe, est susceptible de réaliser un profil convergent divergent comme montré en traits mixtes. Cette modification est obtenue comme décrit déjà dans le document EP-A-29773 du 23 Novembre 1979 au nom de la Demanderesse de manière classique à l'aide des vérins 221 et des biellettes 222.

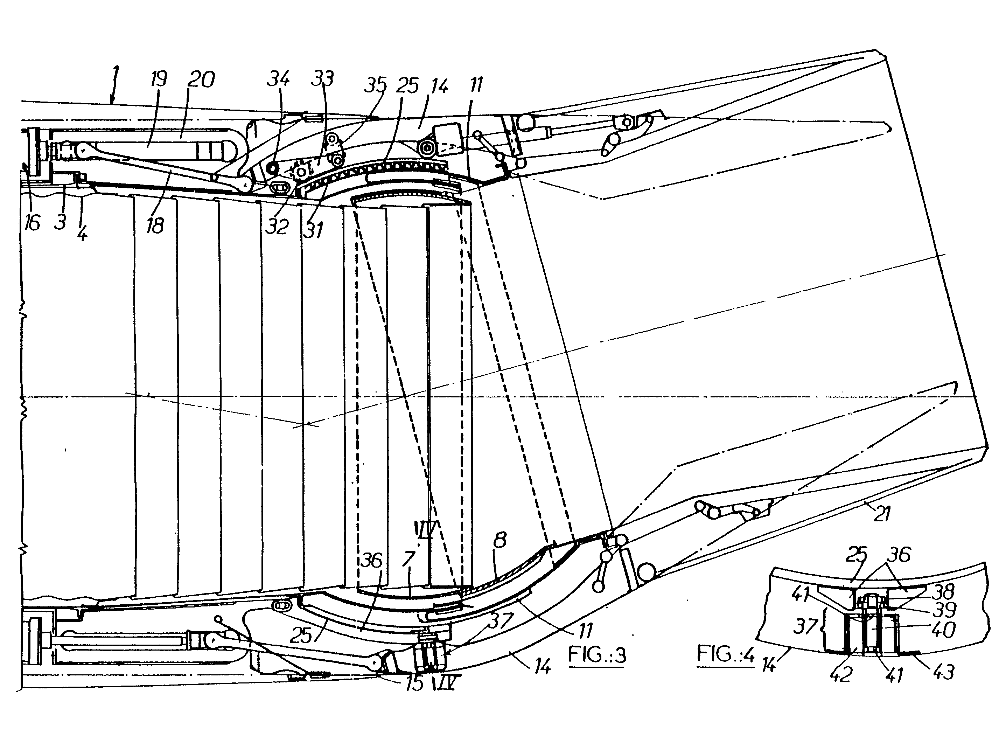

La figure 3 représente un troisième exemple de réalisation du dispositif dans lequel les moyens de roulement sont constitués par une garniture sphérique 31 constituée d'un matériau formé d'une feuille plane sur laquelle est fixée une plaque ondulée, par soudure le long des génératrices qui constituent les sommets des ondulations.

Le matériau est, par exemple, fixé sur la portée sphérique externe 11 de la partie mobile. Le sommet des ondulations coopérant avec la portée sphérique externe 25 de la partie fixe est formé concentriquement à la portée sphérique 11. Le sommet des ondulations est recouvert d'un matériau à faible coefficient de frottement, par exemple du carbone ou un matériau composite résistant à la chaleur. Des moyens presseurs 32 appuient sur la face externe de la portée sphérique fixe externe 25, laquelle est constituée de portions de sphères assemblées jointivement ou en recouvrement. Ces moyens sont constitués d'organes de roulement, par exemple des galets montés sur des leviers 33 articulés en 34 sur la structure extérieure 14 de la partie mobile de la tuyère. La pression du galet sur la portée est déterminée par un organe élastique 35 fixé entre la structure 14 et l'extrémité du levier 33 portant le galet 32. Cet organe 35 joue également le rôle d'amortisseur.

Les galets sont répartis également le long de la périphérie de la portée fixe 25.

L'ensemble du dispositif assure la reprise d'une partie des efforts exercés sur la tuyère, l'autre partie des efforts étant reprise en amont par l'action des vérins 16.

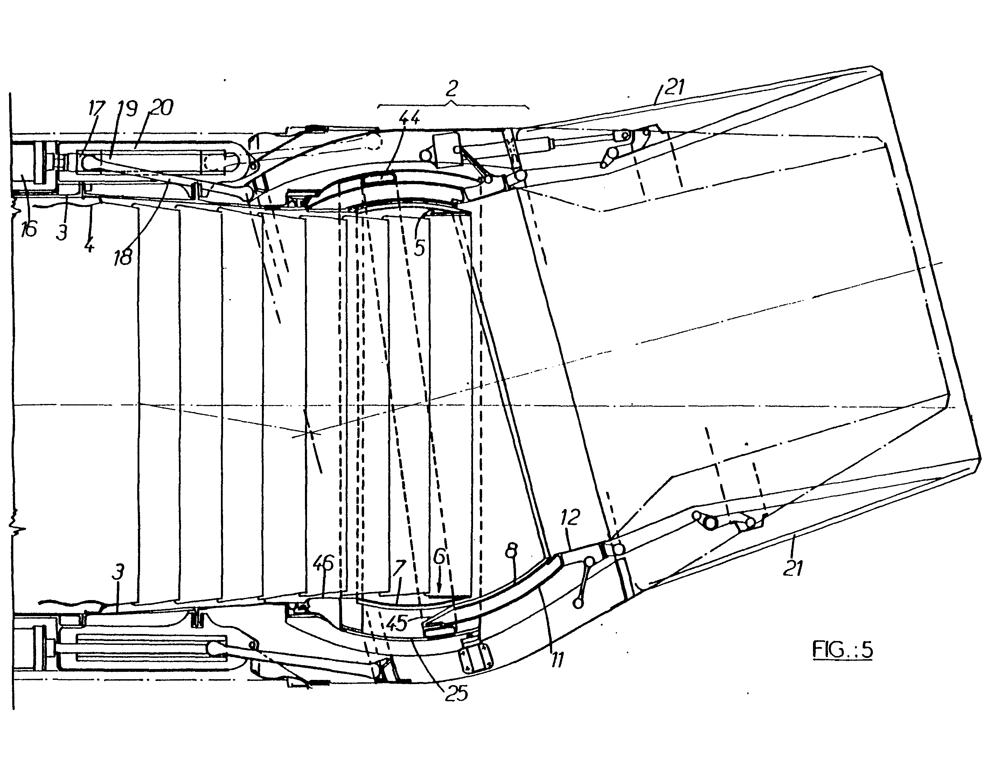

Selon la forme de réalisation représentée, la tuyère orientable comporte également des moyens de guidage, intercales entre les galets presseurs, qui sont représentés sur la partie inférieure de la figure et forment un ensemble comprenant une glissière 36 (figure 4) fixée sur la portée sphérique extérieure 25 de la partie fixe et un galet à double action 37 fixé dans la structure externe 14 de la partie mobile. Les galets à double action 37 sont constitués de deux roulements à billes 38 et 39 décentrés, montés sur un axe 40, lui-même maintenu par l'intermédiaire de deux portées à billes 41 dans un palier 42 fixé par des brides 43 sur la partie interne de la structure externe 14 de la partie mobile de la tuyère.

Les moyens de guidage de la tuyère orientable ci-dessus décrit sont semblables à ceux de la tuyère orientable selon les premières et deuxième formes de réalisations à l'exception près que les éléments galets et glissières sont inversés par rapport à la portée 25 de la partie fixe et à la structure 14 de la partie mobile.

La figure 5 représente un quatrième exemple de réalisation dans lequel les moyens de roulement sont constitués d'un anneau en silicone 44 souple, étanche, gardant sous les variations de charges qu'il supporte, une section constante de son profil dans le plan axial et sur toute son étendue périphérique, permettant ainsi de maintenir un centrage permanent de la partie mobile sur la partie fixe. L'anneau 44 est fixé à l'extrémité de la portée extérieure 11 de la partie mobile. Les modifications apportées par rapport à la tuyère orientable précédemment décrite, sont les suivantes:

- les portées sphériques intérieure 8 et extérieure 11 de la partie mobile sont solidaires à leur extrémité libre par une virole conique 45, qui assure l'étanchéité entre ces deux éléments;

- la virole sphérique 7 fixée à l'anneau cylindrique 6 est solidarisée par son extrémité amont avec le canal d'éjection 3 par un anneau cylindrique 46 et remplace ainsi la portée sphérique intérieure 10 de la partie fixe.

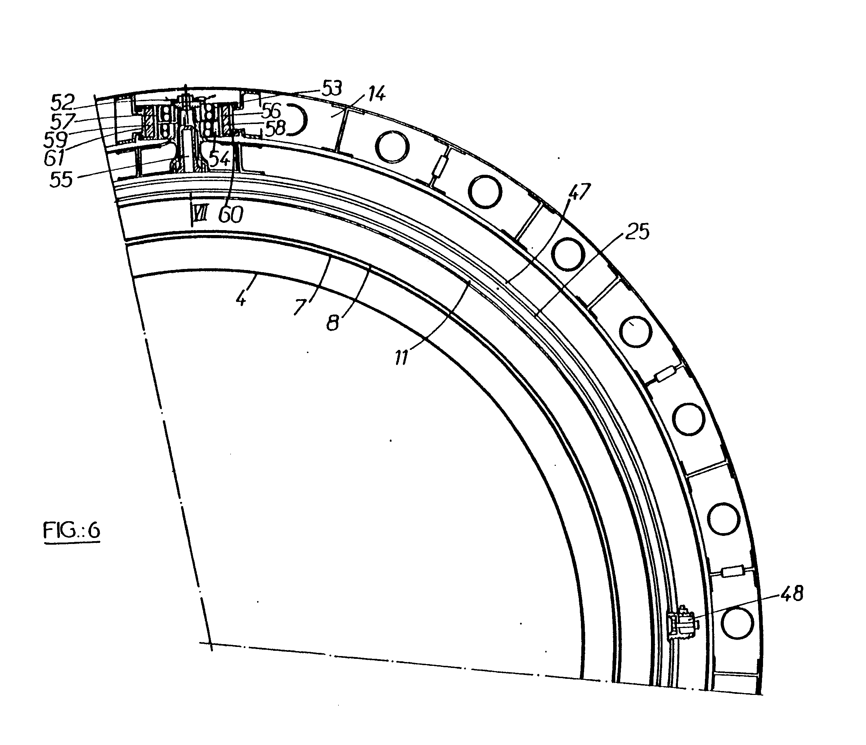

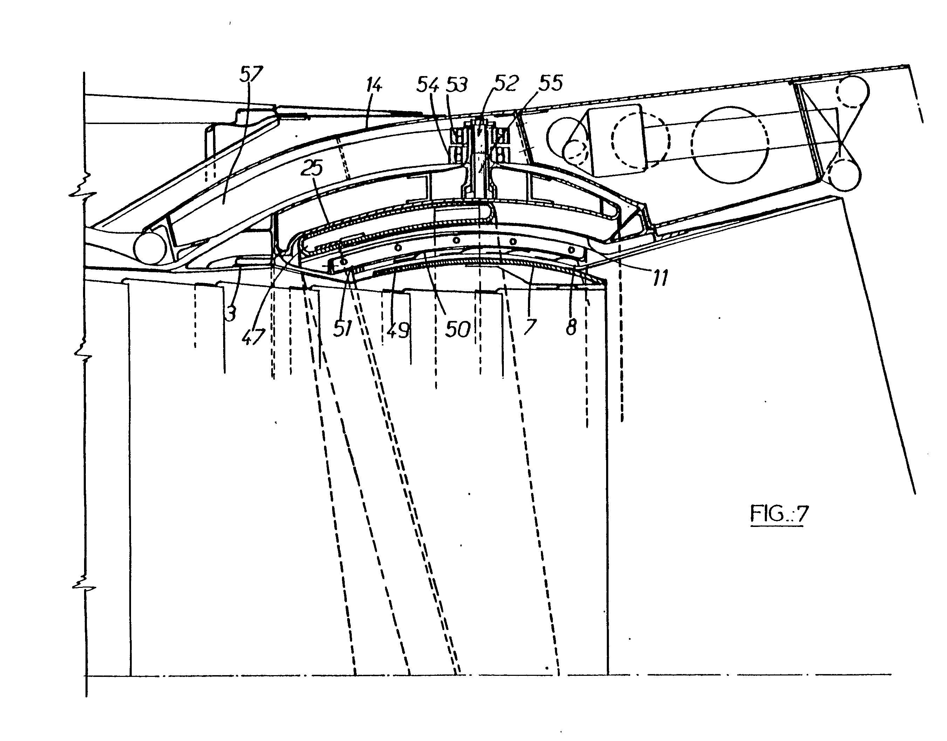

Les figures 6 et 7 représentent une cinquième forme de réalisation dans laquelle les moyens de roulement sont constitués par un anneau déformable 47 qui est fixé sur la portée sphérique extérieure 11 de la partie mobile. Cet anneau est constitué d'une membrane souple fermée en un volume étanche occupant une partie notable de la largeur de la portée mise sous pression à l'aide d'une valve 48 (figure 6).

L'anneau 47 a le même rôle que l'anneau 44 de l'exemple précédent, c'est-à-dire assurer la reprise d'une partie des efforts de la partie mobile sur la partie fixe de la tuyère et l'étanchéité entre le jet de gaz et l'air de refroidissement. Comme dans les autres exemples, il y a également un deuxième étage d'étanchéité entre la portée sphérique intérieure 7 de la partie fixe et celle 8 de la partie mobile constituée par un matériau de frottement 49, tel qu'un nid d'abeilles. Afin d'améliorer le contact et, par conséquent, l'étanchéité entre le nid d'abeilles et la portée sphérique mobile, il est prévu sur la face opposée de la portée 8, des organes élastiques constitués par des profils en S 50 fixés à la périphérie de la portée mobile selon des cercles coaxiaux. Les profils en S 50 peuvent avantageusement être d'un type connu, par exemple à fentes longitudinales et à recouvrement.

L'extrémité des lames vient appuyer et frotter contre une partie sphérique 51 solidaire du support de la portée fixe 25.

Selon une autre disposition des moyens de guidage, ceux-ci comprennent trois galets 52 solidaires de la partie fixe du canal. Les axes de deux des galets sont diamétralement opposés par rapport au canal, tandis que l'axe du troisième est perpendiculaire aux deux autres et disposés au sommet d'un triangle isocèle dont la base passe par les deux autres. La partie mobile de la tuyère tourne donc autour de deux axes perpendiculaires, concourants au centre de rotation. En fonctionnement, le lieu géométrique de l'axe de la tuyère mobile pour une valeur de débattement angulaire maximale, est constituée par un cône de 30° dont le sommet est situé sur le centre de rotation. Cette valeur de 30° est d'ailleurs comparable aux valeurs de débattement des autres formes de réalisation précédemment décrites.

Les galets sont constitués, comme dans les autres exemples de réalisation, de deux rouements à billes 53, 54 tournant autour d'un axe 55 solidaire de la partie fixe 25 du canal d'éjection. Les galets sont en contact constant avec la glissière formée de deux bandes de roulement supportées 56, 57 par deux organes élastiques 58, 59 jouant également le rôle d'amortisseurs.

Les moyens de guidage, constitués des trois ensembles: galets, bandes de roulement et organes élastiques, sont disposés dans la structure extérieure 14 de la partie mobile à laquelle ils se raccordent par les supports.

## Revendications

1. Tuyère orientable de propulseur à réaction comportant une partie fixe à l'aval de laqeulle est située une partie mobile (14) actionnée par des moyens de commande (16, 18) du genre dans lequel ladite partie fixe comporte une portée sphérique intérieure fixe (10) en tôle mince qui coopère, en vue de l'étanchéité entre les parties fixe et mobile, grâce à des moyens d'étanchéité (9), avec une portée sphérique extérieure mobile (11) d'une virole cylindrique (12) de la partie mobile (14) caractérisée en ce que ladite tuyère comporte en outre, une portée sphérique extérieure fixe (25) rigide, coaxiale à la portée sphérique intérieure fixe (10), des moyens de guidage (29, 30; 36, 37; 52, 57) disposés entre les parties fixes (25) et mobiles (14) de la tuyère, la portée sphérique extérieure fixe (25) coopérant en outre, en vue de la transmission des efforts mécaniques entre les parties fixes et mobiles, avec la portée sphérique extérieure mobile (11) en vue de supporter ladite partie mobile, et des moyens de roulement (26, 31, 44, 47) disposés entre la face externe de la portée sphérique extérieure mobile (11) et la face interne de la portée sphérique extérieure fixe (25).

2. Tuyère orientable selon la revendication 1, caractérisée en ce que la face externe de la portée sphérique extérieure mobile (11) et la face interne de la portée sphérique extérieure fixe (25) sont revêtus chacune d'une couche d'un matériau alvéolane séparées entre elles par des billes de roulement (26).

3. Tuyère orientable selon la revendication 1, caractérisée en ce que l'une des parties sphériques extérieures, fixe ou mobile (25, 11) porte une garniture (31) formé par un matériau métallique ondulé placé en regard de l'autre portée sphérique extérieure (11, 25) et coopérant avec un matériau à faible coefficient de frottement placé sur cette dernière.

4. Tuyère orientable selon l'une des revendications 1 à 3, caractérisée en ce que des moyens presseurs (32), constitués d'organes de roulement montés sur des leviers (33) articulés à une extrémité sur la portée mobile (14) et à l'autre à un organe élastique (35) fixé à la partie mobile (14), sont disposés entre la partie mobile (14) et la portée sphérique extérieure fixe (25).

5. Tuyère orientable selon l'une des revendications 1 à 4, caractérisée en ce que la portée sphérique interne fixe (10) coopère, en vue de l'étanchéité avec la portée sphérique externe mobile (11) par l'intermédiaire d'organes élastiques constitués d'au moins une portion de profilés en forme de S.

6. Tuyère orientable selon l'une des revendications 1 à 5, caractérisée en ce qu'il comporte au moins un ensemble de guidage formé d'une glissière (36) et d'un galet (37) fixés sur la portée sphérique extérieure fixe (25) et sur la partie mobile (14), chaque galet (37 étant constitué de deux rouements à billes (38, 39) axialement décentrés portés par l'extrémité d'un axe (40) maintenu dans un palier (42) par deux portées à billes (41).

## Patentansprüche

1. Bewegliche Schubstrahldüse mit einem festen Teil, an dessen stromabwärtiger Seite sich ein durch Antriebsorgane (16, 18) betätigter beweglicher Teil (14) befindet, wobei der feste Teil eine innere feste sphärische Auflagefläche (10) aus dünnem Blech aufweist, die zur Abdichtung zwischen dem festen Teil und dem beweglichen Teil über Dichtungsmittel (9) mit einer äußeren beweglichen sphärischen Auflagefläche (11) eines zylindrischen Ringes (12) des beweglichen Teils (14) zusammenwirkt, dadurch gekennzeichnet, daß die Düse ferner folgende Teile aufweist:
eine starre äußere feste sphärische Auflagefläche (25), die koaxial zu der inneren festen sphärischen Auflagefläche (10) angeordnet ist,
Führungsmittel (29, 30; 36, 37; 52, 57), die zwischen dem festen Teil (25) und dem beweglichen Teil (14) der Düse angeordnet sind, wobei die äußere feste sphärische Auflagefläche (25) außerdem zur Übertragung der mechanischen Kräfte zwischen dem festen Teil und dem beweglichen Teil und zur Lagerung des beweglichen Teils mit der beweglichen äußeren sphärischen Auflagefläche (12) zusammenwirkt,
sowie Wälzmittel (26, 31, 44, 47), die zwischen der Außenseite der äußeren beweglichen sphärischen Auflagefläche (11) und der Innenseite der äußeren festen sphärischen Auflagefläche (25) angeordnet sind.

2. Bewegliche Düse nach Anspruch 1, dadurch gekennzeichnet, daß die Außenseite der äußeren beweglichen sphärischen Auflagefläche (11) und die Innenseite der inneren festen sphärischen Auflagefläche (25) jeweils mit einer Schicht eines aus Zellen bestehenden Werkstoffs verkleidet sind, wobei diese Schichten durch Wälzkugeln (26) voneinander getrennt sind.

3. Bewegliche Düse nach Anspruch 1, dadurch gekennzeichnet, daß entweder der feste oder der bewegliche äußere sphärische Teil (25 bzw. 11) einen aus einem welligen metallischen Werkstoff bestehenden Überzug (31) trägt, der dem jeweils anderen äußeren sphärischen Teil (11 bzw. 25) zugewandt ist und mit einem auf letzterem angeordneten Werkstoff mit niedrigem Reibungskoeffizienten zusammenwirkt.

4. Bewegliche Düse nach einem der Anprüche 1 bis 3, dadurch gekennzeichnet, daß zwischen dem beweglichen Teil (14) und der festen äußeren sphärischen Auflagefläche (25) Druckmittel (33) angeordnet sind, die aus Wälzorganen bestehen, die an Hebeln (33) montiert sind, die mit einem Ende an der beweglichen Auflagefläche (14) und mit dem anderen Ende an einem elastischen Organ (35) montiert sind, das an dem beweglichen Teil (14) befestigt ist.

5. Bewegliche Düse nach einem der Anprüche 1 bis 4, dadurch gekennzeichnet, daß die feste innere sphärische Auflagefläche (10) zur Abdichtung über elastische Organe mit der beweglichen äußeren sphärischen Auflagefläche (11) zusammenwirkt, wobei diese elastischen Organe zumindest aus einem Abschnitt S-förmiger Profilstücke bestehen.

6. Bewegliche Düse nach einem der Anprüche 1 bis 5, dadurch gekennzeichnet, daß sie wenigstens eine Führungseinheit aufweist, die aus einer Gleitführung (36) und einer Führungsrolle (37) besteht, die an der festen äußeren sphärischen Auflagefläche (25) und an dem beweglichen Teil (14) befestigt sind, wobei jede Führungsrolle (37) aus zwei axial dezentrierten Kugellagern (38, 39) besteht, die von dem Ende einer Achse (40) getragen werden, die durch zwei Kugelauflager (41) in einem Lager (42) gehalten ist.

## Claims

1. Orientable nozzle of jet propulsion means, comprising a fixed part, downstream of which is located a movable part (14) actuated by control means (16, 18) of the type in which the said fixed part comprises a fixed inner spherical seating (10) of thin sheet metal which interacts, with a view to the sealing between the fixed and movable parts, by virtue of sealing means (9), with a movable outer spherical seating (11) of a cylindrical hoop (12) of the movable part (14), characterized in that the said nozzle also comprises a fixed outer spherical seating (25) uh ich is rigid and coaxial with the fixed inner spherical seating (10), guide means (29, 30; 36, 37; 52, 57) arranged between the fixed parts (25) and the movable parts (14) of the nozzle, the fixed outer spherical seating (25) also interacting, with a view to the transmission of loadings between the fixed and movable parts, with the movable outer spherical seating (11), with a view to supporting the said movable part, and rolling means (26, 31, 44, 47) arranged between the outer face of the movable outer spherical seating (11) and the inner face of the fixed outer spherical seating (25).

2. Orientable nozzle according to Claim 1, characterized in that the outer face of the movable outer spherical seating (11) and the inner face of the fixed outer spherical seating (25) are each covered with a layer of a cellular material separated from each other by bearing balls (26).

3. Orientable nozzle according to Claim 1, characterized in that one of the outer spherical parts, fixed or movable (25, 11), has a gasket (31) formed by a corrugated metallic material placed opposite the other outer spherical seating (11, 25) and interacting with a material with a low coefficient of friction placed on the latter.

4. Orientable nozzle according to one of Claims 1 to 3, characterized in that the biasing means (32), consisting of rolling members mounted on levers (33) articulated at one end on the movable seating (14) and at the other on a resilient member (35) fixed on the movable part (14), are arranged between the movable part (14) and the fixed outer spherical seating (25).

5. Orientable nozzle according to one of Claims 1 to 4, characterized in that the fixed inner spherical seating (10) interacts, with a view to sealing, with the movable outer spherical seating (11), by means of resilient members consisting of at least one section of profiles in a S shape.

6. Orientable nozzle according to one of Claims 1 to 5, characterized in that it comprises at least a guide assembly formed of a slide (36) and of a roller (37) fixed on the fixed outer spherical seating (25) and on the movable part (14), each roller (37) consisting of two ball bearings (38, 39) which are off-centre axially, carried by the end of a shaft (40) held in a journal (42) by two ball seatings (41).

FIG.: 1

EP 0 060 763 B2

FIG.: 2

EP 0 060 763 B2

FIG.:4

FIG.:3

FIG.:5

EP 0 060 763 B2

FIG.:6

FIG. 7